# EUROPÄISCHE PATENTANMELDUNG

(11) **EP 4 292 414 A1**
(43) Veröffentlichungstag der Anmeldung: **20.12.2023**
(21) Anmeldenummer: 23180184.6
(22) Anmeldetag: 19.06.2023
(51) Int. Cl.: A01C 7/20, A01B 63/111

(54) **BODENBEARBEITUNGSGERÄT MIT TIEFENFÜHRUNGSVORRICHTUNG**

(30) Priorität: 17.06.2022 LU 102969
(71) Anmelder: Gassner - Technik Inh. Gabriele Gaßner-Kolb e. K., 85653 Aying-Göggenhofen (DE)
(72) Erfinder: Kolb, Benedict, 85653 Aying (DE)
(74) Vertreter: Paustian & Partner Patentanwälte mbB

(57) **Zusammenfassung**

Die Erfindung betrifft ein Bodenbearbeitungsgerät umfassend eine Tiefenführungsvorrichtung und zumindest eine verstellbare Bodenaufstandsvorrichtung. Dabei umfasst die Tiefenführungsvorrichtung zumindest einen ersten berührungslosen Abstandssensor und eine Steuerung. Die Steuerung steuert die zumindest eine verstell bare Bodenaufstandsvorrichtung zumindest in Abhängigkeit des Abstandssensors an, um eine Eingriffstiefe zumindest eines Bodenwerkzeuges zu beeinflussen und der erste Abstandssensor in einem hinteren Bereich des Bodenbearbeitungsgeräts angeordnet ist.

## Beschreibung

Die vorliegende Anmeldung bezieht sich auf ein landwirtschaftliches Bodenbearbeitungsgerät mit einer Vorrichtung zur Tiefenführung. Genauer bezieht sich die vorliegende Anmeldung auf ein Bodenbearbeitungsgerät mit einer Tiefenführungsvorrichtung, wobei der Tiefeneingriff des Bodenbearbeitungsgerätes wählbar ist und auch selbsttätig geregelt bzw. gesteuert werden kann.

Die vorliegende Anmeldung hat es zur Aufgabe ein Bodenbearbeitungsgerät mit Tiefenführungsvorrichtung und ein Verfahren zur Tiefenführung eines Bodenbearbeitungsgeräts vorzuschlagen. Diese Aufgabe wird durch die beigefügten unabhängigen Ansprüche gelöst.

Nach einem Aspekt der vorliegenden Anmeldung umfasst ein Bodenbearbeitungsgerät eine Tiefenführungsvorrichtung und zumindest eine verstellbare Bodenaufstandsvorrichtung. Dabei umfasst die Tiefenführungsvorrichtung zumindest einen berührungslosen Abstandssensor und eine Steuerung. Die Steuerung steuert die zumindest eine verstellbare Bodenaufstandsvorrichtung in Abhängigkeit des Abstandssensors an, um eine Eingriffstiefe von zumindest einem Bodenwerkzeug zu beeinflussen. Weiterhin kann zumindest ein Kontrollsensor mit der Steuerung verbunden sein und die Eingriffstiefe auch in Abhängigkeit dieses Sensors gesteuert werden. Der zumindest eine Kontrollsensor kann das Arbeitsergebnis des Bodenbearbeitungsgeräts überwachen. Dies kann den Vorteil haben, dass das Bodenwerkzeug auf eine gewünschte Tiefe (Eingriffstiefe) eingestellt werden kann und dann die Tiefenführungsvorrichtung vermittels der Steuerung und der Daten des ersten Abstandssensors die eingestellte Tiefe dadurch hält, dass die zumindest eine verstellbare Bodenaufstandsvorrichtung entsprechend gesteuert bzw. geregelt wird und ggf. ein gewünschtes Arbeitsergebnis eingehalten wird. Der erste Abstandssensor kann in einem hinteren Bereich oder auch an einem hinteren Ende des Bodenbearbeitungsgeräts angeordnet sein. Damit kann unabhängig von einer Unebenheit des Untergrunds eine gleichbleibende Eingriffstiefe erreicht werden.

Weiterhin kann die Steuerung mit zumindest einem Kontrollsensor verbunden sein, welcher einen (gerade) bearbeiteten Bereich des Bodenwerkzeugs bzw. Bodenbearbeitungsgeräts überwacht. Hier kann das Arbeitsergebnis des Bodenwerkzeugs überwacht werden. Zum Beispiel, ob der Boden ausreichend bearbeitet worden ist, oder ob an Tiefe zugestellt werden muss. Dies kann z.B. bei einem Pflug eine Erkennung sein, ob die Erde komplett gewendet wurde, oder noch Reste der vorherigen Bepflanzung zu detektieren sind. Wenn dies der Fall ist, kann die Eingriffstiefe erhöht werden. Weiterhin kann die Steuerung die Eingriffstiefe so steuern, dass das Bodenwerkzeug gerade tief genug im Boden ist, um ein gewünschtes Arbeitsergebnis zu erzielen. Durch Veränderung der Tiefe kann iterativ eine optimale Eingriffstiefe herausgefunden werden, bei der das Arbeitsergebnis wie gewünscht, aber die Eingriffstiefe und damit der Kraftstoffverbrauch so niedrig wie möglich ist. Der zumindest eine Kontrollsensor kann einen beliebigen und frei wählbaren Bereich des Bodenbearbeitungsgerät überwachen, welcher bereits durch das Bodenbearbeitungsgerät bearbeitet wurde.

Weiterhin kann die Steuerung durch die Überwachung des Arbeitsergebnisses bei entsprechenden Böden eine zu tiefe Eingriffstiefe verhindern. Oftmals kann das Bodenwerkzeug durch die fruchtbare Humusschicht dringen und z.B. Kies oder Steine aus der darunterliegenden Bodenschicht nach oben fördern. Dies ist nicht wünschenswert und vermittels der Überwachung des Arbeitsergebnisses kann die Eingriffstiefe bei Erkennung einer solchen Situation reduziert werden.

Die zumindest eine verstellbare Bodenaufstandsvorrichtung kann gegenüber einem Rahmen des Bodenbearbeitungsgeräts ein- und ausgefahren werden (verstellbarer Teil) und somit das Bodenbearbeitungsgerät angehoben und abgesenkt werden. Eine Bodenaufstandsvorrichtung im Sinne dieser Anmeldung kann ein Rad oder Radkombinationen (z.B. Stützrad, Tastrad, Rückverfestigungsrad), eine Walze (z.B. Nachlaufwalze, Käfigwalze, Krümelwalze, Crackerwalze), Striegel, Schleppen sein. Es können mehrere Bodenaufstandsvorrichtungen und Kombinationen der o.g. Beispiele (z.B. Räder und Walzen) vorhanden sein und diese können auch durch die Tiefenführungsvorrichtung individuell angesteuert werden. Die Begriffe "vorne" und "hinten" beziehen sich im Zusammenhang mit der vorliegenden Anmeldung auf die gewöhnliche Verwendungsrichtung eines Bodenbearbeitungsgeräts im Sinne seiner gewöhnlichen Fahrtrichtung, damit ist "vorne" näher an dem z.B. Schlepper, der das Bodenbearbeitungsgerät zieht, als "hinten", wenn das Bodenbearbeitungsgerät in Fahrtrichtung hinter dem Schlepper gezogen wird.

Ein berührungsloser Abstandssensor im Sinne dieser Anmeldung kann ein optischer Sensor (z.B. Laser), Radar, Ultraschall, LIDAR, kapazitiver Sensor, konfokale Sensor sein. Es können mehrere berührungslose Abstandssensoren und Kombinationen der o.g. Beispiele (z.B. Laser und Radar) vorhanden sein. Für den Kontrollsensor können eine oder mehrere Kameras, IR-Bildgebung, LIDAR oder auch Ultraschall oder Kombinationen davon zum Einsatz kommen.

Nach einem weiteren Aspekt der vorliegenden Anmeldung umfasst die Tiefenführungsvorrichtung weiterhin einen zweiten berührungslosen Abstandssensor. Der zweite berührungslose Abstandssensor ist in einem vorderen Bereich des Bodenbearbeitungsgeräts angeordnet. Dies kann den Vorteil sein, da somit die Daten zur Steuerung der Eingriffstiefe genauer erfasst werden können.

Nach einem weiteren Aspekt der vorliegenden Anmeldung umfasst die Steuerung der Tiefenführungsvorrichtung weiterhin zumindest eine Eingangsschnittstelle. Dies kann den Vorteil haben, dass die Steuerung mit externen Daten versorgt und damit die Genauigkeit der Steuerung der Eingriffstiefe gesteigert werden kann. Diese Daten können z.B. von zumindest einem optischen Sensor sein, der das Arbeitsergebnis des Bodenwerkzeugs bzw. des Bodenbearbeitungsgeräts überwacht.

Nach einem weiteren Aspekt der vorliegenden Anmeldung verwendet die Steuerung zusätzlich Höhensignale einer Schlepperhydraulik, die sie über zumindest eine Eingangsschnittstelle erhält, um die verstellbare Bodenaufstandsvorrichtung anzusteuern. Dies kann den Vorteil haben, dass so Höhendaten in einem vorderen Bereich des Bodenbearbeitungsgeräts erfasst und zur Steuerung der zumindest einen verstellbaren Bodenaufstandsvorrichtung verwendet werden können. Wenn das Bodenbearbeitungsgerät wie herkömmlich üblich an eine Schlepperhydraulik 90 (inclusive Hebesystem) gekoppelt ist, stellt die Schlepperhydraulik Informationen bereit in welcher Höhe sich die Schlepperhydraulik befindet. Diese Daten können in die Steuerung eingespeist werden und unter anderem zur Steuerung der zumindest einen verstellbaren Bodenaufstandsvorrichtung verwendet werden.

Nach einem weiteren Aspekt der vorliegenden Anmeldung weist die Steuerung einer Tiefenführungsvorrichtung weiterhin zumindest eine Ausgangschnittstelle auf. Das kann den Vorteil haben, dass die Steuerung externe Einrichtungen mit Daten versorgen kann.

Nach einem weiteren Aspekt der vorliegenden Anmeldung kann die Ausgangsschnittstelle der Steuerung einer Tiefenführungsvorrichtung dazu vorgesehen und geeignet sein mit einer Schlepperhydraulik zusammen zu wirken. Damit kann die Steuerung z.B. die Schlepperhydraulik ansteuern und ebenso dazu verwenden die Eingriffstiefe eines Bodenwerkzeuges zu steuern/regeln. Dies kann den Vorteil haben, dass die Tiefenführungsvorrichtung genauer arbeiten kann.

Nach einem weiteren Aspekt der vorliegenden Anmeldung kann das Bodenbearbeitungsgerät ein Pflug sein. Dies kann den Vorteil haben, dass umweltschonend geackert werden kann, da die Bearbeitungstiefe genauer gesteuert werden kann.

Nach einem weiteren Aspekt der vorliegenden Anmeldung kann bei einem Bodenbearbeitungsgerät die Bodenaufstandsvorrichtung in einer Verwendungsrichtung (gewöhnliche Fahrtrichtung) des Bodenbearbeitungsgeräts vor dem ersten Abstandssensor angeordnet sein. Dies kann den Vorteil haben, dass eine Eingriffstiefe gut gesteuert werden kann.

Nach einem Aspekt der vorliegenden Anmeldung umfasst ein Verfahren zur Tiefenführung eines Bodenbearbeitungsgeräts die Schritte:
- Berührungsloses Erfassen eines ersten Abstands in einem hinteren Bereich des Bodenbearbeitungsgeräts;
- Verarbeiten des ersten Abstandes;
- Ansteuern von zumindest einer verstellbaren Bodenaufstandsvorrichtung basierend auf der Verarbeitung.

Die voran genannten Schritte können gleichzeitig und fortwährend durchgeführt werden. Das Verfahren kann den Vorteil haben, dass eine Tiefenführung eines Bodenbearbeitungsgeräts genauer durchgeführt werden kann, auch wenn z.B. der Boden uneben ist.

Nach einem weiteren Aspekt umfasst das Verfahren umfassend ein Erfassen eines zweiten Abstands, welcher mit dem ersten Abstand verarbeitet wird. Dies kann den Vorteil haben, dass eine Tiefenführung eines Bodenbearbeitungsgeräts noch genauer durchgeführt werden kann.

Nach einem weiteren Aspekt werden bei dem Verfahren Höhendaten einer Schlepperhydraulik erfasst und ebenso verarbeitet. Dies kann den Vorteil haben, dass eine Tiefenführung eines Bodenbearbeitungsgeräts noch genauer durchgeführt werden kann.

Nach einem weiteren Aspekt wird bei dem Verfahren eine wählbare Eingriffstiefe berücksichtigt. Dies kann den Vorteil haben, dass das Verfahren eine Eingriffstiefe gleichbleibend hält, unabhängig von z.B. Unebenheiten im Boden.

Die voran genannten Schritte können gleichzeitig und fortwährend durchgeführt werden.

Zum besseren Verständnis der Erfindung wird diese anhand der nachfolgenden Figuren näher erläutert. Es zeigen jeweils in stark vereinfachter, schematischer Darstellung:
Fig. 1 eine Ausführungsform der Anmeldung.
Fig. 2 ein Ablaufdiagramm eines Verfahrens zur Tiefenführung.

Einführend sei festgehalten, dass in den unterschiedlich beschriebenen Figu-ren gleiche Teile mit gleichen Bezugszeichen bzw. gleichen Bauteilbezeichnungen versehen werden, wobei die in der gesamten Beschreibung enthaltenen Offenbarungen sinngemäß auf (funktions-)gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen bzw. auf ein Bodenbearbeitungsgerät auf einer horizontalen Ebene stehend und sind diese Lageangaben bei einer Lageänderung sinngemäß auf die neue Lage zu übertragen. Im Hinblick auf die lediglich schematische Darstellung können hieraus keine Größenmaßstäbe oder -verhältnisse abgeleitet werden. Das offenbarte Verfahren wird in Zusammenhang mit der nachfolgenden Vorrichtungsbeschreibung gegeben.

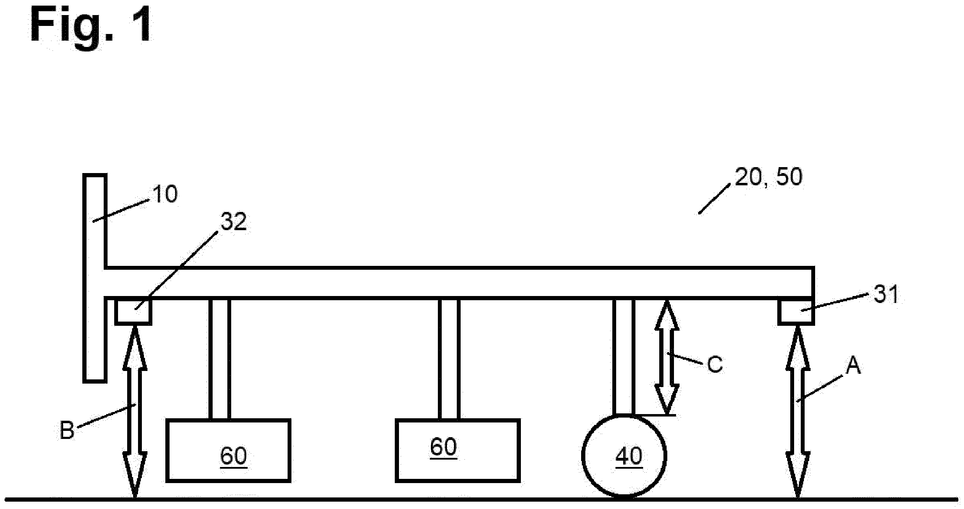

Anfänglich wird Bezug genommen auf Fig. 1, welche eine Ausführungsform der Anmeldung zeigt. Ein auf dem Boden stehendes Bodenbearbeitungsgerät 10 umfassend ein Tiefenführungsvorrichtung 20 mit einem ersten und einem zweiten Abstandssensor 31 und 32 ist gezeigt. Das Bodenbearbeitungsgerät 10 umfasst zwei Bodenwerkzeuge 60, welche in diesem Fall Pflugscharen sind. Weiterhin umfasst das Bodenbearbeitungsgerät 10 (in diesem Falle ein Pflug) eine verstellbare Bodenaufstandsvorrichtung 40, welche im dargestellten Beispiel ein Rad ist. Für gewöhnlich ist das Bodenbearbeitungsgerät 10 an einen Schlepper angebracht und kann mit dessen hydraulischen Hubvorrichtung (Schlepperhydraulik) angehoben werden. In der Darstellung der Fig. 1 wäre der Schlepper (nicht gezeigt) auf der linken Seite befindlich. Demzufolge ist dort in Bezug auf das Bodenbearbeitungsgerät 10 "vorne" und dementsprechend der erste Sensor 31 in einem hinteren Bereich angeordnet.

Die verstellbare Bodenaufstandsvorrichtung 40 ist zusammen mit dem ersten Abstandssensor 31 im hinteren Bereich des Bodenbearbeitungsgeräts 10 angeordnet. Der Abstandssensor 31 kann auch an einem hinteren Ende des Bodenbearbeitungsgeräts 10 angeordnet sein. Der ersten Abstandssensor 31 ist ein berührungsloser Sensor, welcher einen Abstand zwischen einem beliebigen Teil/Abschnitt des Bodenbearbeitungsgeräts 10 misst. In der Darstellung der Fig. 1 ist beispielhaft ein erster Abstand A zwischen dem ersten Abstandssensor 31 und dem Boden dargestellt. Allerdings kann eine (nicht gezeigte) Steuerung 50, welche die Signale des ersten und zweiten Abstandssensors 31 und 32 empfängt bei bekannten Dimensionen z.B. des Bodenwerkzeugs 60, den Abstand (wie gezeigt) zwischen dem Bodenwerkzeug 60 und dem Boden oder dessen Eingriff in den Boden (nicht gezeigt) berechnet werden. Der Eingriff des Bodenbearbeitungsgeräts 10 in den Boden bzw. der erste und/oder zweite Abstand A bzw. B bestimmt sich durch eine Hubposition der Schlepperhydraulik und/oder eines Abstandes der verstellbaren Bodenaufstandsvorrichtung 40 gegenüber dem Boden bzw. durch den Abstand C (Länge des verstellbaren Teils der Bodenaufstandsvorrichtung 40).

Mit anderen Worten ergibt sich der Eingriff des Bodenwerkzeugs 60 in den Boden durch eine Verstellung bzw. Hubhöhe der Schlepperhydraulik und/oder eines Abstands der verstellbaren Bodenaufstandsvorrichtung 40. Wenn das Rad bzw. die verstellbare Bodenaufstandsvorrichtung 40 weniger weit vom Bodenbearbeitungsgerät 10 beabstandet ist und/oder die Schlepperhydraulik abgelassen wird (näher an den Boden gebracht wird), dann verkleinert sich der Abstand zwischen dem Bodenwerkezug 60 und dem Boden bzw. kommt das Bodenwerkzeug 60 mit dem Boden in Eingriff.

Das Bodenbearbeitungsgerät 10 kann weiterhin einen Kontrollsensor (nicht gezeigt) umfassen, welcher einen vom Bodenbearbeitungsgerät 10 bearbeiteten Bereich kontrolliert. Diese Daten können auch von der Steuerung verwendet werden, um die Eingriffstiefe zu steuern (siehe oben).

Die Lage im Raum bzw. der Abstand zum Boden des in Fig. 1 dargestellten Bodenbearbeitungsgeräts 10 kann sowohl über die verstellbare Bodenaufstandsvorrichtung 40 und eine Hubhöhe des vorderen Teils der Bodenaufstandsvorrichtung 10 durch die nicht gezeigte Schlepperhydraulik beeinflusst werden. Über die ersten und zweiten Abstandssensoren 31 und 32 können die ersten und zweiten Abstände A und B bestimmt werden und der Abstand bzw. Eingriffstiefe des Bodenwerkzeugs bzw. der Bodenwerkzeuge 60 beeinflusst werden.

Die Steuerung 50 ist mit den Abstandssensoren (31; 32) und ggf. der Schlepperhydraulik (z.B. über zumindest eine Eingangsschnittstelle) verbunden, um Höhensignale/Abstandsdaten der Schlepperhydraulik zu verarbeiten und ggf. die Schlepperhydraulik (z.B. über zumindest eine Ausgangsschnittstelle) zu beeinflussen. Weiterhin ist die Steuerung 50 mit der verstellbaren Bodenaufstandsvorrichtung 40 verbunden, um diese ansteuern zu können und deren Abstand C von dem Bodenbearbeitungsgerät 10 zu beeinflussen. Die Steuerung 50 kann selbsttätig unter Berücksichtigung der erfassten Abstände/Daten den Eingriff des Bodenwerkzeugs 60 steuern und z.B. auf einer gewünschten Eingriffstiefe halten in dem die verstellbare Bodenaufstandsvorrichtung 10 und ggf. die Schlepperhydraulik beeinflusst werden.

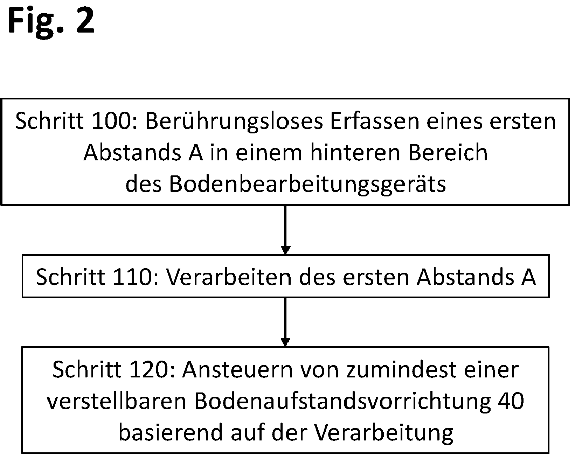

Fig. 2 zeigt ein Ablaufdiagram eines Verfahrens zur Tiefenführung eines Bodenbearbeitungsgeräts. Dabei wird in einem Schritt 100 ein erster Abstand A berührungslos in einem hinteren Bereich des Bodenbearbeitungsgeräts 10 erfasst.

In einem Schritt 110 wird der erfasste erste Abstand A verarbeitet. Dies kann z.B. auch eine wählbare Eingriffstiefe des Bodenbearbeitungsgeräts umfassen.

In einem Schritt 120 wird eine verstellbare Bodenaufstandsvorrichtung 40 basierend auf der Verarbeitung angesteuert, z.B. um einen Abstand C zu verändern.

Der Schritt 100 kann weiterhin das Erfassen einen zweiten Abstands B und/oder die Erfassung von Höhendaten einer Schlepperhydraulik umfassen. Weiterhin können Daten von zumindest einem Kontrollsensor (nicht gezeigt) erfasst werden, welcher einen vom Bodenbearbeitungsgerät 10 bearbeiteten Bereich kontrolliert. Dies wird dann ebenfalls im Schritt 110 verarbeitet.

Das Ausführungsbeispiel zeigt eine mögliche Ausführungsvariante, wobei an dieser Stelle bemerkt sei, dass die Erfindung nicht auf die speziell dargestellte Ausführungsvariante derselben eingeschränkt ist, sondern vielmehr auch diverse Kombinationen der einzeln offenbarten Merkmale möglich sind. Es müssen nicht immer alle Merkmale vorhanden sein. Diese Variationsmöglichkeit liegt aufgrund der Lehre zum technischen Handeln durch gegenständliche Erfindung im Können des auf diesem technischen Gebiet tätigen Fachmannes. Es wurde z.B. zwei Bodenwerkzeuge beschrieben (Pflugscharen). Jedoch kann es sich auch um eine Säheinrichtung oder jedwedes andere Bodenbearbeitungsgerät handeln, bei welchem der Abstand zum Boden bzw. eine Eingriffstiefe relevant sind. Die verstellbare Bodenaufstandsvorrichtung wurde als Rad beschrieben, kann aber jedwede (siehe oben) verstellbare Bodenaufstandsvorrichtung sein. Der zweite Abstandssensor 32 und/oder die Höhendaten der Schlepperhydraulik sind optional.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Der Ordnung halber sei abschließend darauf hingewiesen, dass zum besseren Verständnis des Aufbaus Elemente teilweise unmaßstäblich und/oder vergrößert und/oder verkleinert dargestellt wurden und Dimensionen nur dort abgeleitet werden können, wo dies explizit beschrieben ist.

### Bezugszeichenliste

- 10: Bodenbearbeitungsgerät
- 20: Tiefenführungsvorrichtung
- 31: erster Abstandssensor
- 32: zweiter Abstandssensor
- 40: Bodenaufstandsvorrichtung
- 50: Steuerung
- 60: Bodenwerkzeug

- A: erster Abstand
- B: zweiter Abstand
- C: Abstand Bodenaufstandsvorrichtung

## Patentansprüche

1. Bodenbearbeitungsgerät (10) umfassend eine Tiefenführungsvorrichtung (20) und zumindest eine verstellbare Bodenaufstandsvorrichtung (40), wobei die Tiefenführungsvorrichtung zumindest einen ersten berührungslosen Abstandssensor (31) und eine Steuerung (50) umfasst, und wobei die Steuerung die zumindest eine verstellbare Bodenaufstandsvorrichtung zumindest in Abhängigkeit des Abstandssensors (30) ansteuert, um eine Eingriffstiefe zumindest eines Bodenwerkzeuges (60) zu beeinflussen und der erste Abstandssensor in einem hinteren Bereich des Bodenbearbeitungsgeräts angeordnet ist.

2. Bodenbearbeitungsgerät (10) nach Anspruch 1, wobei die Tiefenführungsvorrichtung (20) weiterhin einen zweiten berührungslosen Abstandssensor (32) umfasst, wobei der zweite berührungslose Abstandssensor in einem vorderen Bereich des Bodenbearbeitungsgeräts angeordnet ist.

3. Bodenbearbeitungsgerät (10) nach Anspruch 1 oder 2, wobei die Steuerung (50) zumindest eine Eingangsschnittstelle aufweist.

4. Bodenbearbeitungsgerät (10) nach Anspruch 3, wobei die Steuerung (50) über die Eingangsschnittstelle Höhensignale einer Schlepperhydraulik empfängt und verwendet, um die verstellbare Bodenaufstandsvorrichtung (40) anzusteuern.

5. Bodenbearbeitungsgerät (10) nach einem der vorangegangenen Ansprüche, wobei die Steuerung (50) weiterhin zumindest eine Ausgangsschnittstelle aufweist.

6. Bodenbearbeitungsgerät (10) nach Anspruch 5, wobei die Ausgangsschnittstelle dazu vorgesehen und geeignet ist mit einer Schlepperhydraulik zusammen zu wirken.

7. Bodenbearbeitungsgerät (10) nach einem der vorangegangenen Ansprüche, wobei das Bodenbearbeitungsgerät ein Pflug ist.

8. Bodenbearbeitungsgerät (10) nach einem der vorangegangenen Ansprüche, wobei die Bodenaufstandsvorrichtung (40) in einer Verwendungsrichtung des Bodenbearbeitungsgeräts vor dem ersten Abstandssensor (31) angeordnet ist.

9. Verfahren zur Tiefenführung eines Bodenbearbeitungsgeräts (10), umfassend die Schritte:
• Berührungsloses Erfassen eines ersten Abstands (A) in einem hinteren Bereich des Bodenbearbeitungsgeräts;
• Verarbeiten des ersten Abstandes;
• Ansteuern von zumindest einer verstellbaren Bodenaufstandsvorrichtung (40) basierend auf dem ersten Abstand.

10. Verfahren zur Tiefenführung nach Anspruch 9, weiterhin umfassend ein Erfassen eines zweiten Abstands, welcher mit dem ersten Abstand verarbeitet wird.

11. Verfahren zur Tiefenführung nach Anspruch 9 oder 10, wobei Höhendaten einer Schlepperhydraulik erfasst und ebenso verarbeitet werden.

12. Verfahren zur Tiefenführung nach einem der Ansprüche 9 bis 11, wobei das Verarbeiten eine wählbare Eingriffstiefe berücksichtigt.
